# EUROPÄISCHE PATENTSCHRIFT

(11) **EP 2 861 891 B1**
(45) Veröffentlichungstag und Bekanntmachung des Hinweises auf die Patenterteilung: **18.12.2019**
(21) Anmeldenummer: 13727180.5
(22) Anmeldetag: 06.06.2013
(51) Int. Cl.: F16H 57/04, F16H 3/00

(54) **SCHMIERFLUID-TEMPERIERUNGSVERFAHREN UND -VORRICHTUNG**
METHOD AND DEVICE FOR LUBRICATING FLUID TEMPERATURE CONTROL
PROCÉDÉ ET DISPOSITIF DE THERMORÉGULATION D'UN FLUIDE DE LUBRIFICATION

(30) Priorität: 19.06.2012 DE 102012012837
(43) Veröffentlichungstag der Anmeldung: 22.04.2015
(73) Patentinhaber: Magna PT B.V. & Co. KG, 74199 Untergruppenbach (DE)
(72) Erfinder: KIEHLNEKER, Alexander, 74223 Flein (DE)
(74) Vertreter: Rausch, Gabriele
(86) Internationale Anmeldenummer: PCT/EP2013/061696
(87) Internationale Veröffentlichungsnummer: WO 2013/189754

(56) Entgegenhaltungen:
- EP-A2- 0 990 820
- DE-A1-102009 019 814
- US-A- 2 687 784
- US-A1- 2005 202 933
- US-A1- 2009 114 498

## Beschreibung

Die vorliegende Erfindung betrifft ein Verfahren und eine Vorrichtung zum Temperieren eines Schmierfluides einer Kupplungs-/Getriebeanordnung eines Antriebsstranges, wobei die Kupplungs-/Getriebeanordnung eine Gehäuseanordnung aufweist, in der wenigstens ein Schmierfluid aufgenommen ist.

Bei Getriebeanordnungen für Kraftfahrzeugantriebsstränge mit niedrigeren Leistungen ist, abgesehen von einer gegebenenfalls vorgesehenen Verrippung am Außenumfang der Getriebeanordnung, keine separate Kühlvorrichtung notwendig. Für Gehäuseanordnungen, die in Antriebssträngen mit leistungsstarken Antriebsmotoren verbaut werden, sind hingegen sogenannte Ölkühler bekannt. Diese können entweder als Öl/Luftkühler oder als Öl/Kühlmittelkühler realisiert werden, wobei diese Ölkühler häufig neben einem Motorkühler im Bereich eines Kühlergrills angeordnet werden. Bei derartigen Ölkühlern ist es häufig notwendig, separate Schmierölleitungen von der Außenseite hin zu einem separat angeordneten Ölkühler zu verlegen. Die Ölkühler benötigen zudem einen entsprechenden Bauraum innerhalb des Motorraums des Kraftfahrzeuges. Auch ist es hierbei notwendig, das Schmieröl mittels einer separaten Pumpe hin zu dem Ölkühler zu fördern.

Eine ähnliche Problematik tritt in sogenannten Lastschaltgetrieben auf, bei denen nasslaufende Lamellenkupplungen als Schaltkupplungen verwendet werden. Diese Lastschaltkupplungen können entweder mit dem gleichen Schmierfluid versorgt werden, das auch in der Getriebeanordnung verwendet wird. In diesem Fall kann ein gemeinsamer Ölsumpf für die Getriebeanordnung und die Kupplungsanordnung vorgesehen sein. In anderen Fällen ist für die Lastschaltkupplung ein eigenes Schmierfluid mit einem eigenen Schmierfluidsumpf vorgesehen.

Der Antriebsmotor des Antriebsstranges kann beispielsweise ein Verbrennungsmotor oder ein Elektromotor sein. In beiden Fällen ist es bevorzugt, wenn der Antriebsmotor mittels eines Kühlfluides gekühlt wird, das aus einem Motorkühler gefördert wird, der im Bereich eines Kühlergrills des Kraftfahrzeuges angeordnet ist. Das Kühlfluid kann in diesem Fall durch einen Luftstrom gekühlt werden, der entweder aufgrund des Fahrtwindes oder mittels eines separaten Lüfters bereitgestellt wird.

Aus dem Dokument DE 42 12 243 A1 ist ein Getriebe mit einem Getriebedeckel bekannt, der einen mit einem Kühlmittelkreislauf verbundenen Kühlmantel aufweist. Der Kühlmantel ist dabei insbesondere durch einen flüssigkeitsdicht mit dem Getriebedeckel verbundenen weiteren Deckel gebildet, der mit dem Getriebedeckel verschweißt oder verlötet wird. Der weitere Deckel (Kühldeckel) weist wenigstens einen Kühlmitteleintritt und einen Kühlmittelaustritt auf.

Das Kühlmittel kann dabei aus einem ohnehin in dem Kraftfahrzeug vorhandenen Kühlmittelkreislauf bereitgestellt werden. Hierbei soll eine Kühlung des Schmierfluides in dem Getriebe unabhängig von dessen Einbaulage und von einer eventuell ungünstigen fahrtwindbedingten Luftzufuhr gewährleistet werden.

Aus dem Dokument EP 0 990 820 A2 ist eine Motorgetriebeeinheit mit gemeinsamer Kühlung bekannt, wobei Kühlkanäle in einem Getriebegehäuse bzw. in einem Getriebedeckel mit Kühlkanälen in einem Motorgehäuse zur Kühlung des Motors verbunden sind. Der Motor ist dabei insbesondere ein Elektromotor, kann jedoch auch ein Verbrennungsmotor sein. Die Kühlkanäle können dabei in Form von Kühlschlangen im Getriebe- oder Motorgehäuse oder in einem als Doppelmantel ausgebildeten Getriebe- oder Motorgehäuse angeordnet sein. Das Kühlfluid ist vorzugsweise ein Wasser-Glykol-Gemisch. An dem Gehäuse können ferner Kühlrippen ausgebildet sein, die an der Außenseite der Gehäuseanordnung oder an der Innenseite der Gehäuseanordnung vorgesehen sind.

Aus dem Dokument US 2009/114498 A1 ist eine Kupplungseinheit in einem Kraftfahrzeugantriebsstrang bekannt, wobei die Kupplungseinheit wenigstens eine Nasskupplung aufweist, die von einem Kühlfluid, wie beispielsweise Öl, benetzt wird. Das Kühlfluid nimmt dabei Reibungswärme auf, die durch einen Schlupf zwischen benachbarten Kupplungsscheiben entsteht, wobei die aufgenommene Wärme durch einen Wärmetauscher von dem Kühlfluid an eine Kühleinheit, die die Kupplungseinheit umgibt, abgegeben wird. Das Verfahren sieht die Schritte vor:
- Erfassen eines Temperierungsbedarfes des Schmierfluides (66);
- Einführen von Temperierungsfluid in den Temperierungskanal;
- Versetzen der Kupplung in Rotation und
- Versorgen der Kupplung mit Schmierfluid, derart, dass das Schmierfluid durch die Rotation der Kupplung radial nach außen gegen eine Innenseite des Temperierungskanals gefördert wird

Vor dem obigen Hintergrund ist es eine Aufgabe der Erfindung, ein verbessertes Verfahren zum Temperieren eines Schmierfluides einer Kupplungs-/Getriebeanordnung in einem Doppelkupplungsgetriebe eines Antriebsstranges sowie eine entsprechende Temperierungsvorrichtung anzugeben, wobei ein gezieltes bzw. aktives Wärmemanagement erzielbar ist. Diese Aufgabe wird gelöst durch ein Verfahren zum Temperieren eines Schmierfluides einer Kupplungs-/Getriebeanordnung eines Antriebstranges gemäß Anspruch 1 und eine entsprechende Kupplungs-/Getriebeanordnung gemäß Anspruch 8.

Durch diese Maßnahme ist es möglich, über das Schmierfluid und dessen Zuführen zu dem Drehglied und zu der Innenseite des Temperierungskanals gezielt Wärme abzuleiten bzw. zuzuführen.

Das Erfassen eines Temperierungsbedarfes des Schmierfluides kann insbesondere das Erfassen eines Temperierungsbedarfes in einem Getriebe der Kupplungs-/Getriebeanordnung beinhalten. Der Temperierungsbedarf des Schmierfluides kann dabei beispielsweise durch einen Temperatursensor in dem Getriebe ermittelt werden.

Der Temperatursensor muss dabei nicht notwendigerweise an dem Ort der höchsten Temperatur innerhalb der Gehäuseanordnung positioniert sein.

Sofern an bestimmten Orten der Gehäuseanordnung eine große Wärme entsteht, kann diese von dem Schmierfluid übernommen werden. Das Schmierfluid wird dann gezielt hin zu dem Temperierungskanal gefördert, um das Schmierfluid auf diese Weise abzukühlen. In entsprechender Weise funktioniert dies auch, um das Schmierfluid beispielsweise bei Start des Kraftfahrzeuges in kalten Umgebungsbedingungen gezielt zu erwärmen. Denn das Kühlfluid, bei dem es sich vorzugsweise um ein Kühlfluid eines Motorkühlers handelt, erwärmt sich in der Regel schneller als das Schmierfluid, so dass auf diese Weise auch eine aktive Schmierfluiderwärmung ermöglicht ist.

Vorliegend wird daher von einer Temperierung des Schmierfluides gesprochen. Zur vereinfachten Darstellung wird jedoch an vielen Stellen lediglich auf eine Kühlung des Schmierfluides abgestellt, wobei diese Ausführungen sich in entsprechender Weise auch auf eine Erwärmung des Schmierfluides anwenden lassen.

Für die aktive Getriebekühlung werden dabei keine Zusatzbauteile benötigt, sofern ein Temperierungskanal ohnehin vorhanden ist. Der Temperierungskanal kann dabei insbesondere dazu vorgesehen sein, um Schmierfluid zu kühlen, das sich aufgrund einer hohen Wärmeentwicklung in dem Drehglied erwärmt hat. Bei dem Drehglied kann es sich nämlich beispielsweise um eine Lastschaltkupplung handeln, wie eine nasslaufende Lamellenkupplung. Derartige Lastschaltkupplungen "produzieren" insbesondere dann, wenn sie schlupfend betrieben werden, eine hohe Wärme. Dies ist insbesondere dann der Fall, wenn Schaltungen unter Last erfolgen, wie es beispielsweise bei Doppelkupplungsgetrieben der Fall ist.

Sofern derartige Lastschaltkupplungen geschlossen oder geöffnet sind, ist der Bedarf an Zufuhr von Schmierfluid zu der Lastschaltkupplung eher gering.

Durch das erfindungsgemäße Verfahren kann jedoch auch in solchen Zuständen gezielt Schmierfluid dem Drehglied zugeführt werden, um auf diese Weise eine unzulässige Erwärmung des Schmierfluides zu vermeiden, die beispielsweise durch eine erhöhte Belastung in dem Getriebe entsteht.

Der Begriff des Schmierfluides ist vorliegend breit zu verstehen, da das Schmierfluid in einer Kupplungs-/Getriebeanordnung generell nicht nur zu Schmierzwecken sondern auch zu Temperierungszwecken verwendbar ist.

Das Temperierungsfluid ist vorliegend auch als Kühlfluid bezeichnet und ist vorzugsweise ein wasserbasiertes Kühlfluid (beispielsweise ein Wasser-Glykol-Gemisch), wie es in einem Motorkühler verwendet wird. In diesem Fall sind separate Schmierölleitungen von der Gehäuseanordnung hin zu einem separaten Ölkühler nicht erforderlich. Auch sind keine Zusatzpumpen oder sonstigen Steuerungselemente notwendig, um eine aktive Getriebekühlung zu ermöglichen.

Gemäß der erfinderischen Ausführungsform weist die Kupplungs-/Getriebeanordnung ein Doppelkupplungsgetriebe mit einer Doppelkupplungsanordnung auf.

Die Doppelkupplungsanordnung kann dabei zwei axial benachbart zueinander angeordnete Reibkupplungen aufweisen, kann jedoch auch radial ineinander verschachtelte Reibkupplungen aufweisen. In manchen Fällen werden die Reibkupplungen separat mit Schmieröl versorgt, in anderen Fällen werden sie parallel bzw. gleichzeitig mit Schmierfluid versorgt.

Bei einem derartigen Aufbau ist es sinnvoll, wenn vor oder bei dem Versorgen wenigstens einer der Kupplungen mit Schmierfluid erfasst wird, ob eine Gangstufe in dem inaktiven Teilgetriebe eingelegt ist, wobei diese Gangstufe, wenn eingelegt, dann ausgelegt wird.

Auf diese Weise können Schleppverluste, hervorgerufen durch Zwangsdrehzahlen von Primär- und Sekundärseite, vermieden werden.

Die Aufgabe wird somit vollkommen gelöst.

Wie oben erwähnt, ist es von besonderem Vorteil, wenn das Drehglied bei Temperierungsbedarf des Schmierfluides auch dann mit Schmierfluid versorgt wird, wenn das Drehglied selbst keinen Schmierfluidbedarf hat.

Ferner ist es vorteilhaft, wenn das Drehglied eine nasslaufende Reibkupplung ist, und wenn die Reibkupplung bei Temperierungsbedarf des Schmierfluides in einem geöffneten oder in einem geschlossenen Zustand mit Schmierfluid versorgt wird.

Generell ist es vorteilhaft, wenn das Drehglied dann mit Schmierfluid versorgt wird, wenn eine Differenz zwischen einer Temperatur des Schmierfluides und einer Temperatur des Temperierungsfluides größer ist als ein vorbestimmter Schwellenwert.

Nur wenn die Temperaturdifferenz größer ist als ein vorbestimmter Schwellenwert, kann eine effiziente Temperierung des Schmierfluides erfolgen.

Generell ist es vorteilhaft, wenn das Drehglied dann mit Schmierfluid versorgt wird, wenn eine Temperatur des Temperierungsfluides kleiner ist als eine Temperatur des Schmierfluides.

In diesem Fall kann das Schmierfluid mittels des Temperierungsfluides gekühlt werden.

Alternativ hierzu wird das Drehglied dann mit Schmierfluid versorgt, wenn eine Temperatur des Temperierungsfluides größer ist als eine Temperatur des Schmierfluides.

In diesem Fall kann das Schmierfluid mittels des Temperierungsfluides erwärmt werden.

Die eingangs genannte Aufgabe wird ferner gelöst durch eine Kupplungs-/Getriebeanordnung eines Antriebsstranges, mit einer Gehäuseanordnung, in der wenigstens ein Schmierfluid aufgenommen ist, wobei in der Gehäuseanordnung ein in Rotation versetzbares Drehglied angeordnet ist, das von radial innen mit Schmierfluid versorgbar ist, und mit Temperierungsvorrichtung für das Schmierfluid, wobei in der Gehäuseanordnung ein Temperierungskanal angeordnet ist, durch den ein Temperierungsfluid strömen kann und der sich um einen Umfangsabschnitt des Drehgliedes herum erstreckt, und mit einer Erfassungseinrichtung, die einen Temperierungsbedarf des Schmierfluides erfassen kann, wobei die Temperierungsvorrichtung dazu ausgebildet und eingerichtet ist, um das erfindungsgemäße Verfahren durchzuführen, mit den Schritten: Erfassen eines Temperierungsbedarfes des Schmierfluides; Einführen von Temperierungsfluid in den Temperierungskanal, falls nicht bereits erfolgt; Versetzen des Drehgliedes in Rotation, falls nicht bereits erfolgt, und Versorgen des Drehgliedes mit Schmierfluid, derart, dass das Schmierfluid durch die Rotation des Drehgliedes radial nach außen gegen eine Innenseite des Temperierungskanals gefördert wird.

Eine Gehäuseanordnung einer Kupplungs-Getriebeanordnung ist vorzugsweise so ausgebildet, dass der Kühlkanal durch einen zu einem ersten Innenraum oder einer Außenseite der Gehäuseanordnung offenen Kanal des Gehäuseabschnittes und durch eine Abdeckeinrichtung gebildet ist, die den offenen Kanal verschließt.

Die Abdeckeinrichtung ist vorzugsweise ein flaches Bauelement, das direkt oder unter Zwischenschaltung einer Dichtungsanordnung auf den offenen Kanal aufgesetzt und fluiddicht mit diesem verbunden wird. Die Abdeckeinrichtung kann folglich als eine Art Kanaldeckel ausgebildet sein. Die Abdeckeinrichtung kann aus dem gleichen Material wie die Gehäuseanordnung hergestellt sein, insbesondere aus einem Metall. Bevorzugt ist die Abdeckeinrichtung jedoch durch ein temperaturfestes Kunststoff- oder Kunststoff-Verbundmaterial gebildet. Der Gehäuseabschnitt ist vorzugsweise aus einem gut wärmeleitenden Material wie einem Metallmaterial gebildet, und bildet vorzugsweise einen Wandabschnitt, der quer zu einer Längsachse der Gehäuseanordnung ausgerichtet ist.

Der Gehäuseabschnitt ist bevorzugt durch Gießen hergestellt. Hierdurch kann der Gehäuseabschnitt kostengünstig auch in großen Stückzahlen hergestellt werden.

Ferner lässt sich ein offener Kanal des Gehäuseabschnittes in dem Gießschritt vergleichsweise einfach herstellen. Insbesondere kann der offene Kanal einstückig mit dem Gehäuseabschnitt ausgebildet werden, und zwar in einem Arbeitsschritt. Die offene Seite des offenen Kanals ist dabei vorzugsweise quer zu einer Richtung ausgerichtet, in der Gießformen zum Herstellen des Gehäuseabschnittes voneinander getrennt werden.

Mit anderen Worten kann der offene Kanal durch einen sich hin zu dem ersten Innenraum oder der Außenseite der Gehäuseanordnung erstreckenden Steg gebildet sein, der vorzugsweise parallel zu der Längsachse der Gehäuseanordnung ausgerichtet ist.

Der Kühlkanal weist vorzugsweise einen schlingenförmigen Verlauf auf, wobei sich der Kühlkanal vorzugsweise über einen Winkelbereich von etwas weniger oder etwas mehr als 360° erstreckt, insbesondere über einen Winkelbereich von 200° bis 500°, vorzugsweise von 300° bis 420°, und besonders bevorzugt von 320° bis 355°.

Ferner ist es vorteilhaft, wenn der Kühlkanal zumindest einen Kanalabschnitt aufweist, der sich in axialer Projektion mit einem Schmierfluidsumpf im Inneren der Gehäuseanordnung überschneidet.

In dem Kühlkanal kann wenigstens ein erster Kühlvorsprung vorgesehen sein, der vorzugsweise parallel zur Längsachse der Gehäuseanordnung ausgerichtet ist. Ferner kann der Gehäuseabschnitt mit einem zweiten Kühlvorsprung verbunden sein, der auf der dem Kühlkanal abgewandten Seite des Gehäuseabschnittes angeordnet ist und vorzugsweise einstückig mit dem Gehäuseabschnitt ausgebildet ist. Der zweite Kühlvorsprung ist vorzugsweise parallel zu dem ersten Kühlvorsprung ausgerichtet.

Der Kühlkanal kann bei sämtlichen Ausführungsformen im Betrieb des Kraftfahrzeuges ständig mit Kühlfluid versorgt werden, also im Wesentlichen parallel an eine Kühlkanalanordnung in dem Antriebsmotor angeschlossen sein. Es ist jedoch auch möglich, Kühlfluid lediglich bedarfsweise in den Kühlkanal einzuführen, wozu bspw. eine Anbindung an einen Motorkühler über eine Ventilanordnung erfolgen kann, die temperaturgesteuert schaltet (bspw. in Abhängigkeit von der Temperatur des Schmierfluides).

Das Drehglied kann ein Zahnrad sein. Insbesondere kann es sich bei dem Drehglied jedoch um eine nasslaufende Lamellenkupplung handeln.

In der erfindungsgemäßen Ausführungsform handelt es sich um ein Doppelkupplungsgetriebe.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele sind in der Zeichnung dargestellt und werden in der nachfolgenden Beschreibung näher erläutert. Es zeigen:
- Fig. 1: eine schematische Längsschnittansicht durch ein Kraftfahrzeug mit einem erfindungsgemäßen Antriebsstrang;
- Fig. 2: eine schematische Darstellung einer weiteren Ausführungsform eines erfindungsgemäßen Antriebsstranges;
- Fig. 3: eine schematische Längsschnittansicht durch eine Ausführungsform einer nicht erfindungsgemäßen Gehäuseanordnung;
- Fig. 4: eine Längsschnittansicht durch eine weitere Ausführungsform einer nicht erfindungsgemäßen Gehäuseanordnung;
- Fig. 5: eine Schnittansicht entlang der Linie V-V der Fig. 4;
- Fig. 6: eine schematische Längsschnittansicht durch eine weitere Ausführungsform einer erfindungsgemäßen Gehäuseanordnung;
- Fig. 7: eine Schnittansicht entlang der Linie VII-VII der Fig. 6;
- Fig. 8: eine Schnittansicht entlang der Linie VIII-VIII der Fig. 7;
- Fig. 9: eine schematische Darstellung einer weiteren Ausführungsform eines er findungsgemäßen Antriebsstranges mit einer erfindungsgemäßen Gehäuseanordnung; und
- Fig. 10: eine Ausführungsform einer Schmierfluidversorgungseinrichtung für den Antriebsstrang der Fig. 9.

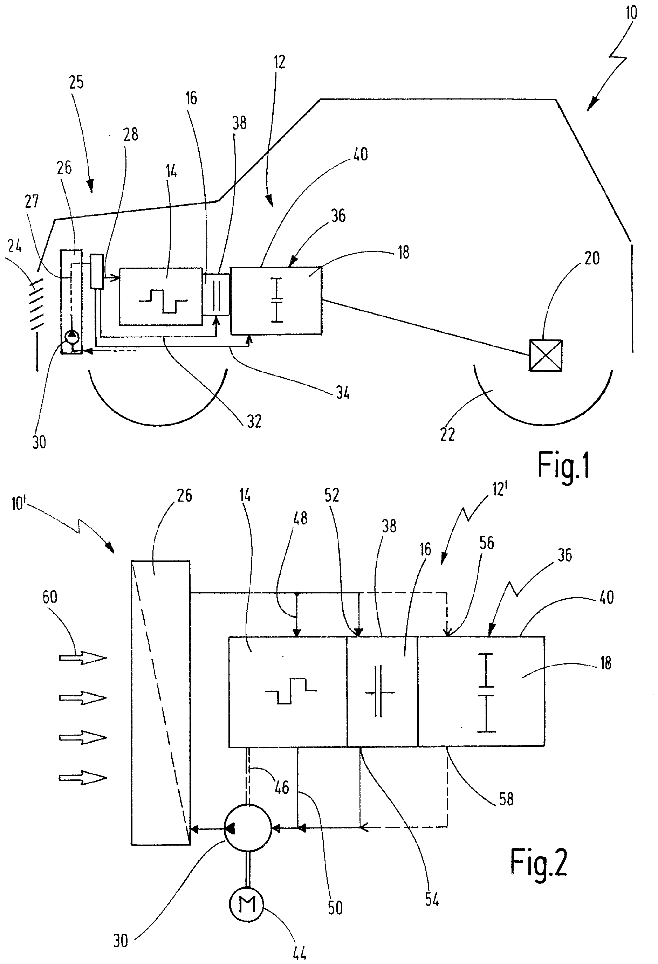

In Fig. 1 ist ein Kraftfahrzeug wie ein Personenkraftwagen schematisch dargestellt und generell mit 10 bezeichnet. Das Kraftfahrzeug 10 weist einen Antriebsstrang 12 mit einem Antriebsmotor 14 auf, der vorliegend als Verbrennungsmotor dargestellt ist, jedoch auch als Elektromotor oder als Hybrid-Antriebseinheit ausgebildet sein kann. Ein Ausgang des Antriebsmotors 14 ist mit einer Kupplungsanordnung 16 verbunden, die als trockene Reibkupplungsanordnung ausgebildet sein kann, jedoch auch eine nasslaufende Kupplung aufweisen kann. Ein Ausgang der Kupplungsanordnung 16 ist mit einer Getriebeanordnung 18 verbunden, die beispielsweise als Stufengetriebe, insbesondere in Vorgelegebauweise, ausgebildet sein kann. Ein Ausgang der Getriebeanordnung 18 ist mit einem Differential 20 verbunden, das Antriebsleistung auf angetriebene Räder 22 einer angetriebenen Achse verteilt.

Das Kraftfahrzeug 10 weist an seinem vorderen Ende einen Kühlergrill 24 auf, hinter dem ein Motorkühler 26 einer Kühleranordnung 25 angeordnet ist. In dem Motorkühler 26 ist ein wasserbasiertes Kühlfluid 27, insbesondere ein Wasser-Glykol-Gemisch, enthalten. Der Motorkühler 26 dient insbesondere für eine schematisch an- gedeutete Motorkühlung 28. Dabei ist dem Motorkühler 26 eine Kühlerpumpe 30 zugeordnet, die Kühlfluid 27 aus dem Motorkühler 26 hin zu dem Antriebsmotor 14 pumpt. Ein Rückfluss hin zu einer Saugseite der Kühlerpumpe 30 ist in Fig. 1 lediglich angedeutet.

Im vorliegenden Fall ist eine Druckseite der Kühlerpumpe 30 ferner über eine nicht näher bezeichnete Verteilereinrichtung mit einer Kupplungskühlung 32 und/oder mit einer Getriebekühlung 34 verbunden.

Die Kupplungsanordnung 16 ist in einem Kupplungsgehäuse 38 einer Gehäuseanordnung 36 aufgenommen. Die Getriebeanordnung 18 ist in einem Getriebegehäuse 40 der Gehäuseanordnung 36 aufgenommen. In dem Getriebegehäuse 40 ist ein Schmierfluidsumpf vorhanden. In dem Kupplungsgehäuse 38 kann ein separater Schmierfluidsumpf enthalten sein, der von dem Schmierfluidsumpf des Getriebegehäuses 40 getrennt ist. Alternativ können das Kupplungsgehäuse 38 und das Getriebegehäuse 40 auch so ausgestaltet sein, dass in diesen ein gemeinsamer Schmierfluidsumpf für die Kupplungsanordnung 16 und für die Getriebeanordnung 18 aufgenommen ist.

Bei dem Antriebsstrang 12 der Fig. 1 wird folglich das in dem Motorkühler 26 enthaltene Kühlfluid 27 nicht nur zur Motorkühlung 28, sondern auch zur Kühlung eines Schmierfluides in dem Kupplungsgehäuse 38 und/oder in dem Getriebegehäuse 40 verwendet. Separate Schmierfluidleitungen von der Gehäuseanordnung 36 hin zu einem separaten Schmierfluidkühler (Ölkühler) sind daher nicht notwendig.

In Fig. 2 ist eine weitere Ausführungsform eines Antriebsstranges 12' eines Kraftfahrzeuges 10 dargestellt, wobei der Antriebsstrang 12' hinsichtlich Aufbaus und Funktionsweise generell dem Antriebsstrang 12 der Fig. 1 entspricht. Gleiche Elemente sind daher durch gleiche Bezugszeichen gekennzeichnet. Im Folgenden werden im Wesentlichen die Unterschiede erläutert.

In Fig. 2 ist gezeigt, dass die Kühlerpumpe 30 außerhalb des Motorkühlers 26 angeordnet ist und mittels eines Kühlerpumpenmotors 44 angetrieben ist. Ferner ist gezeigt, dass die Kühlerpumpe 30 alternativ oder zusätzlich auch mittels einer schematisch angedeuteten Nebenantriebswelle 46 angetrieben sein kann, die mit einer Antriebswelle des Antriebsmotors 14 gekoppelt ist.

Das Kühlfluid wird aus dem Motorkühler 26 mittels der Kühlerpumpe 30 herausgepumpt und hin zu einem Motorzufluss 48 geleitet. Ein Motorabfluss 50 ist mit einer Saugseite der Kühlerpumpe 30 verbunden. Ferner ist gezeigt, dass ein Ausgang des Motorkühlers 26 mit einem Zuflussanschluss 52 für einen Wärmetauscher im Inneren der Gehäuseanordnung 36 verbunden ist, im vorliegenden Fall mit einem Wärmetauscher im Inneren des Kupplungsgehäuses 38, wobei der Wärmetauscher vorzugsweise durch einen Kühlkanal gebildet ist, der konzentrisch zu der in dem Kupplungsgehäuse 38 angeordneten Kupplungsanordnung 16 angeordnet ist. Ein Abflussanschluss der Gehäuseanordnung 36 ist bei 54 gezeigt, der ebenfalls mit dem Sauganschluss der Kühlerpumpe 30 verbunden ist.

Ferner ist in Fig. 2 gestrichelt dargestellt, dass ein weiterer Zuflussanschluss 56 mit dem Getriebegehäuse 40 verbunden sein kann, und dass ein weiterer Abflussanschluss 58 von dem Getriebegehäuse 40 hin zu der Saugseite der Kühlerpumpe 30 geführt sein kann. Auch zeigt Fig. 2, dass der Motorkühler 26 im Betrieb mit einem Luftstrom 60 beaufschlagt wird, der beispielsweise durch Fahrtwind oder mittels eines Kühlerlüfters bereitgestellt werden kann.

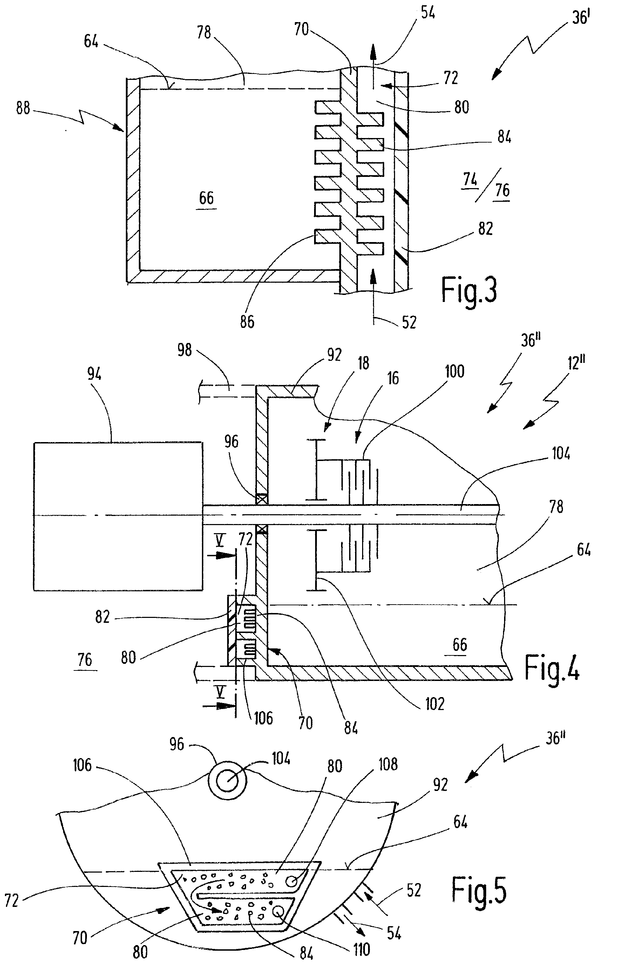

Fig. 3 zeigt in schematischer Form eine erste Ausführungsform einer Gehäuseanordnung 36', die hinsichtlich Aufbaus und Funktionsweise generell der Gehäuseanordnung 36 der Fig. 1 und 2 entsprechen kann. Gleiche Elemente sind daher durch gleiche Bezugszeichen gekennzeichnet. Im Folgenden werden im Wesentlichen die Unterschiede erläutert.

Die Gehäuseanordnung 36' beinhaltet einen Fluidsumpf 64 mit einem Schmierfluid 66. Der Fluidsumpf 64 wird an einer Seite von einem Gehäuseabschnitt 70 begrenzt. Auf der dem Fluidsumpf 64 abgewandten Seite des Gehäuseabschnittes 70 ist ein Kühlkanal 72 ausgebildet, der mit dem Zuflussanschluss 52 und dem Abflussanschluss 54 verbunden ist. Der Kühlkanal 72 ist dabei auf der dem Fluidsumpf 64 abgewandten Seite des Gehäuseabschnittes 70 ausgebildet, wobei es sich hierbei um eine Außenseite 74 der Gehäuseanordnung 36' handeln kann oder um einen ersten Innenraum 76. Der Fluidsumpf 64 ist in einem zweiten Innenraum 78 der Gehäuseanordnung 36' aufgenommen.

Der Kühlkanal 72 ist gebildet durch einen einstückig mit dem Gehäuseabschnitt 70 ausgebildeten offenen Kanal 80, der durch eine Abdeckeinrichtung 82 abgedeckt ist. Die Abdeckeinrichtung 82 ist vorzugsweise als Deckel ausgebildet und ist vorzugsweise parallel zu dem Gehäuseabschnitt 70 angeordnet.

In den Kühlkanal 72 ragen eine Mehrzahl von stiftförmigen ersten Kühlvorsprüngen 84, so dass eine große Oberfläche für den Wärmeübergang zwischen Kühlfluid 27 und Gehäuseabschnitt 70 bereitgestellt wird.

Auf der zum zweiten Innenraum 78 weisenden Seite kann der Gehäuseabschnitt 70 ferner mit einer weiteren Mehrzahl von zweiten Kühlvorsprüngen 86 ausgebildet sein, die die wirksame Fläche für den Wärmeübergang zwischen Schmierfluid 66 und Gehäuseabschnitt 70 vergrößern. Die zweiten Kühlvorsprünge 86 können ebenfalls als stiftartige Vorsprünge ausgebildet sein.

Der Gehäuseabschnitt 70 ist mit dem verbleibenden Teil des Gehäuses (beispielsweise einem Getriebegehäuse 88) verbunden, der das Getriebegehäuse 40 und/oder das Kupplungsgehäuse 38 beinhalten kann. Zwischen dem Gehäuseabschnitt 70 und dem restlichen Teil der Gehäuseanordnung 36' ist ebenfalls ein Wärmeübergang möglich, so dass Wärme auch über das Getriebegehäuse 88 hin zu dem Kühlkanal 72 geleitet werden kann.

Der Gehäuseabschnitt 70 ist vorzugsweise ein Teil der Gehäuseanordnung 36', der sich quer zu einer Längsachse des Antriebsstranges 12' erstreckt. Der Gehäuseabschnitt 70 ist dabei vorzugsweise durch Gießen hergestellt, und zwar aus einem Metallmaterial Die Vorsprünge an dem Gehäuseabschnitt 70 zur Bildung des offenen Kanals 80 und/oder die ersten Kühlvorsprünge 84 und/oder die zweiten Kühlvorsprünge 86 sind vorzugsweise einstückig mit dem Gehäuseabschnitt 70 ausgebildet, und sind vorzugsweise während des Gießvorganges mit an den Gehäuseabschnitt 70 angeformt. Demzufolge kann ein Wärmetauscher im Inneren der Gehäuseanordnung 36' auf einfache Weise realisiert werden, da der offene Kanal 80 lediglich fluiddicht mittels der Abdeckeinrichtung 82 verschlossen werden muss. Die Abdeckeinrichtung 82 kann ein Deckelbauteil sein, das beispielsweise aus Kunststoff oder einem kunststoffbasierten Verbundmaterial hergestellt ist. Die Abdeckeinrichtung 82 kann jedoch auch aus Metall hergestellt sein. Die fluiddichte Verbindung kann durch Verschrauben (vorzugsweise unter Verwendung einer Dichtung) und/oder durch Schweißen erfolgen.

In Fig. 4 ist eine weitere Ausführungsform eines Antriebsstranges 12" dargestellt, der hinsichtlich Aufbaus und Funktionsweise generell dem Antriebsstrang 12 der Fig. 1 entspricht. Gleiche Elemente sind daher durch gleiche Bezugszeichen gekennzeichnet. Im Folgenden werden im Wesentlichen die Unterschiede erläutert. Eine Gehäuseanordnung 36" des Antriebsstranges 12" beinhaltet ein Gehäuse 92, das topfartig ausgebildet ist und dessen Topfboden einen Gehäuseabschnitt 70 bildet. In dem Gehäuse 92 ist ein Lastschaltgetriebe enthalten, das eine Getriebeanordnung 18 mit wenigstens einem Losrad sowie eine Kupplungsanordnung 16 in Form einer nasslaufenden Lamellenkupplung (Lastschaltkupplung) 100 aufweist.

Der Antriebsstrang 12' beinhaltet vorliegend einen Antriebsmotor in Form eines Elektromotors 94, dessen Antriebswelle über den Gehäuseabschnitt 70 in das Innere des Gehäuses 92 geführt ist, und zwar unter Verwendung einer Wellendichtung 96. Der elektrische Antriebsmotor 94 kann in einem Motorgehäuse 98 aufgenommen sein, das sich in axialer Richtung an das Gehäuse 92 anschließt.

Ein Losrad der Getriebeanordnung 18 ist in Fig. 4 bei 102 gezeigt. Das Losrad 102 ist an einer Antriebswelle 104 drehbar gelagert, die mit der Ausgangswelle des elektrischen Antriebsmotors 94 verbunden ist. Durch Öffnen und Schließen der Lastschaltkupplung 100 kann das Losrad 102 mit der Antriebswelle 104 verbunden oder hiervon getrennt werden, um auf diese Weise eine Gangstufe ein- oder auszulegen. Die Getriebeanordnung 18 kann wenigstens ein weiteres derartiges Losrad 102 aufweisen. Die Kupplungsanordnung 16 kann beispielsweise eine weitere Lastschaltkupplung 100 aufweisen, um auf diese Weise ein Lastschaltgetriebe mit zwei oder mehr Gangstufen einzurichten. Weitere Komponenten der Getriebeanordnung 18 (wie beispielsweise mit den Losrädern kämmende Festräder, sowie eine Ausgangswelle der Getriebeanordnung 18) sind aus Gründen einer übersichtlicheren Darstellung nicht gezeigt.

Die Kupplungsanordnung 16 und die Getriebeanordnung 18 sind in dem Gehäuse 92 aufgenommen, und zwar in einem zweiten Innenraum 78. Eine dem Innenraum 78 abgewandte Seite des Gehäuseabschnittes 70 ist gebildet durch einen ersten Innenraum 76 des Motorgehäuses 98 oder durch eine Außenseite des Gehäuses 92.

An der dem Innenraum 78 abgewandten Seite des Gehäuseabschnittes 70 ist ein Kühlkanal 72 ausgebildet, der in Fig. 5 in der Draufsicht dargestellt ist.

Der Kühlkanal 72 ist durch einen offenen Kanal 80 gebildet, der mittels einer Kanalwand 106 gebildet ist, die von dem Gehäuseabschnitt 70 axial vorsteht. Die Kanalwand 106 weist in der Draufsicht eine polygonale oder abgerundete Form auf und ist in der axialen Projektion überschneidend mit dem Fluidsumpf 64 angeordnet. Die Kanalwand 106 weist ferner einen in Fig. 5 nicht näher bezeichneten Mittelsteg auf, wodurch ein offener Kanal 80 mit einem in der Draufsicht im Wesentlichen U-förmigen Verlauf gebildet ist. Der Kühlkanal 72 bildet folglich einen schlingenförmigen Verlauf. An einem Ende der U-Form ist eine Zuflussöffnung 108 ausgebildet, die mit einem nicht näher dargestellten Zuflussanschluss 52 verbunden ist. An dem anderen Ende des U- Querschnittes ist eine Abflussöffnung 110 ausgebildet, die mit dem hier nicht näher dargestellten Abflussanschluss 54 verbunden ist. Ferner erstrecken sich parallel zu der Kanalwand 106 eine Mehrzahl von ersten Kühlvorsprüngen 84, die wie bei den vorherigen Ausführungsformen stiftförmig ausgebildet sind.

Der offene Kanal 80 ist zur Bildung des Kühlkanals 72 mittels einer Abdeckeinrichtung 82 fluiddicht verschlossen. Im vorliegenden Fall ist in dem Motorgehäuse 98 ohnehin Raum für den Kühlkanal 72 vorhanden. In einer alternativen Ausgestaltung kann der Kühlkanal 72 auch auf der dem Innenraum 78 zugewandten Seite des Gehäuseabschnittes 70 ausgebildet sein.

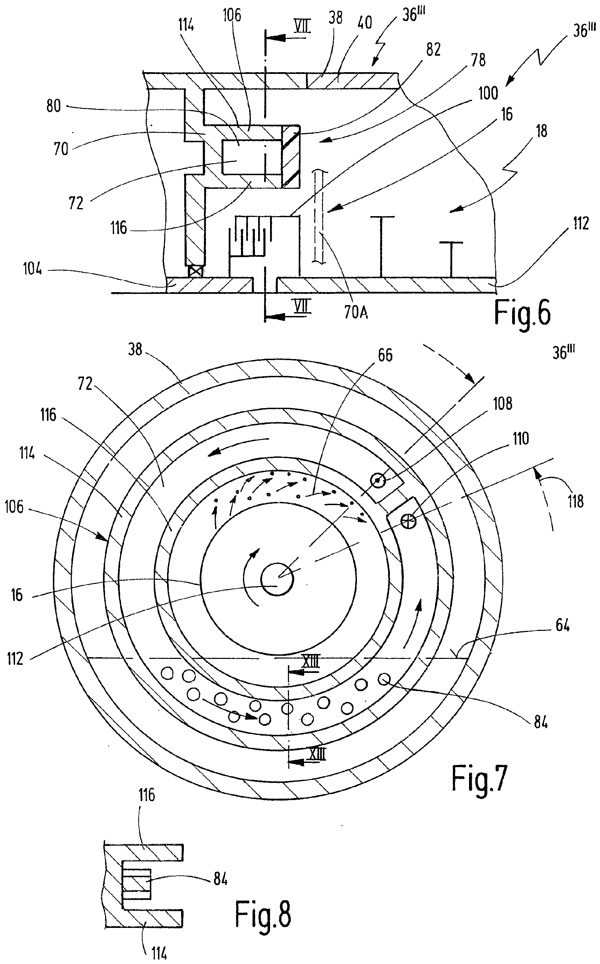

In den Fig. 6 bis 8 ist eine weitere Ausführungsform einer Gehäuseanordnung 36"' gezeigt, die hinsichtlich Aufbaus und Funktionsweise den oben beschriebenen Gehäuseanordnungen entspricht. Gleiche Elemente sind daher durch gleiche Bezugszeichen gekennzeichnet. Im Folgenden werden im Wesentlichen die Unterschiede erläutert.

Die Gehäuseanordnung 36"' weist ein kombiniertes Gehäuse auf, das ein Kupplungsgehäuse 38 und ein Getriebegehäuse 40 bildet, die durch einen Gehäuse- abschnitt 70 in Form eines Gehäusedeckels verschlossen sind, jedoch auch durch einen Gehäuseabschnitt 70A voneinander getrennt sein können. Eine Antriebswelle 104 von einem Antriebsmotor erstreckt sich durch den Gehäuseabschnitt 70. Die Kupplungsanordnung 16 beinhaltet eine Lastschaltkupplung 100 in Form einer nasslaufenden Lamellenkupplung, die bspw. die Antriebswelle 104 mit einer weiteren Getriebewelle 112 (Getriebeeingangswelle) koppelt oder hiervon trennt.

An dem Gehäuseabschnitt 70 (oder 70A) ist ein Kühlkanal 72 ausgebildet, der eine hin zu dem zweiten Innenraum 78 weisende Kanalwand 106 aufweist. Vorliegend weist die Kanalwand 106 einen äußeren Ringabschnitt 114 und einen inneren Ringabschnitt 116 auf, die koaxial zueinander und koaxial zu den Wellen 104, 112 ausgebildet sind. Der äußere und der innere Ringabschnitt 114, 116 erstrecken sich dabei über einen Winkelbereich 118, der kleiner ist als 360° und vorzugsweise größer als 270°. Der Kühlkanal 72 erstreckt sich folglich über den gleichen Winkelbereich und ist folglich schlingenförmig. Eine Zuflussöffnung 108 und eine Abflussöffnung 110 sind an den jeweiligen Enden des annähernd ringförmigen Kühlkanals 72 ausgebildet, derart, dass diese Öffnungen benachbart zueinander angeordnet sind.

Eine Abdeckeinrichtung 82 in Form eines ringförmigen Deckels verschließt den durch die Ringabschnitte 114, 116 gebildeten offenen Kanal 80. Die Ringabschnitte 114, 116 erstrecken sich dabei in axialer Richtung ausgehend von dem Gehäuse- abschnitt 70 so, dass sie sich um die Lastschaltkupplung 100 herum erstrecken. Wie es in Fig. 7 gezeigt ist, wird Schmierfluid, das der Lastschaltkupplung 100 von radial innen zugeführt wird (wie bei einer an sich bekannten Einspritzschmierung), radial nach außen gegen eine radiale Innenwand des inneren Ringabschnittes 106 geschleudert, wo das Schmierfluid 66 effizient gekühlt werden kann.

Ferner erstreckt sich der Kühlkanal 72 in der axialen Projektion zumindest abschnittsweise über einen Bereich, der mit dem Fluidsumpf 64 zusammenfällt.

Wie es in Fig. 8 gezeigt ist, kann der Kühlkanal 72 (zumindest in diesem Überschneidungsbereich) mit ersten Kühlvorsprüngen 84 versehen sein, die stiftförmig ausgebildet sein können. Hierdurch kann im Bereich des Fluidsumpfes 64 die Fläche des Wärmeüberganges vergrößert werden.

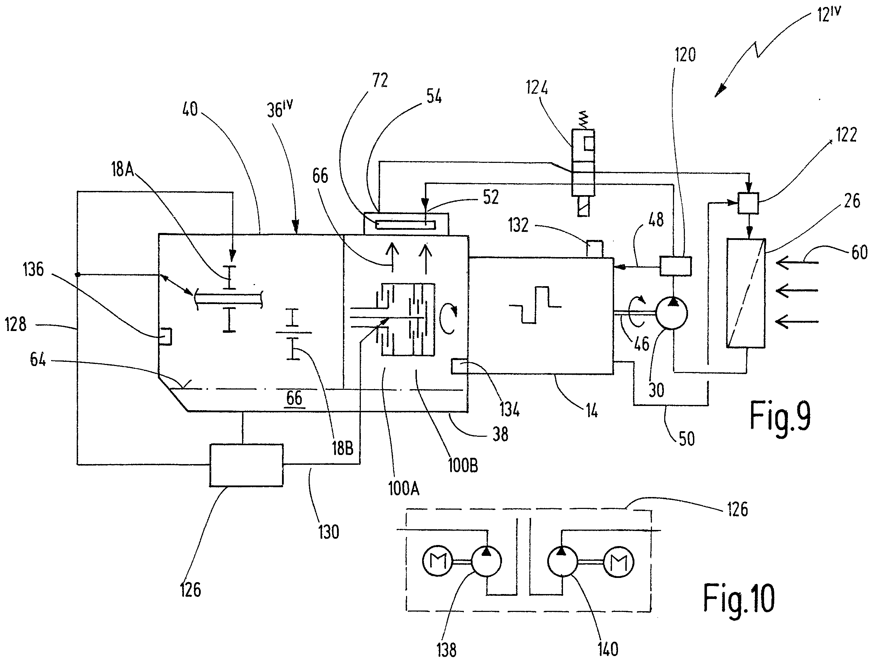

In Fig. 9 ist eine weitere Ausführungsform eines Antriebsstranges 12^{IV} gezeigt, der hinsichtlich Aufbaus und Funktionsweise den oben beschriebenen Antriebssträngen entsprechen kann. Gleiche Elemente sind durch gleiche Bezugszeichen gekennzeichnet. Im Folgenden werden im Wesentlichen die Unterschiede erläutert.

Eine Druckseite der Kühlerpumpe 30 ist mit einer optionalen Verteilereinrichtung 120 verbunden, die direkt mit dem Motorzufluss 48 und über ein Absperrventil 124 mit dem Zuflussanschluss 52 verbunden ist. Eine Saugseite der Kühlerpumpe 30 ist, über den Motorkühler 26, mit einer optionalen Sammeleinrichtung 122 verbunden, die direkt mit dem Motorabfluss 50 und über das Absperrventil 124 mit dem Abflussanschluss 54 verbunden ist.

Der Kühlkanal 72 ist zumindest abschnittsweise um eine Kupplungsanordnung 16 herum angeordnet, die im vorliegenden Fall eine erste und eine zweite Lastschaltkupplung 100A, 100B einer Doppelkupplungsgetriebeanordnung beinhaltet. In entsprechender Weise weist die Getriebeanordnung 18 vorliegend ein erstes Teilgetriebe 18A und ein zweites Teilgetriebe 18B auf, die in Fig. 9 lediglich schematisch angedeutet sind. Der Kühlkanal 72 ist zumindest abschnittsweise koaxial und um den Außenumfang der Kupplungsanordnung 100A, 100B herum angeordnet, derart, dass radial wegspritzen- des Schmierfluid 66 gegen eine Innenwand des Kühlkanals 72 gefördert wird.

Das Absperrventil 124 kann als einfaches 4/2-Wegeventil ausgebildet sein, derart, dass in einer Position (die in Fig. 9 dargestellt ist) der Kühlkanal 72 mit Kühlfluid versorgt wird. In der anderen Position, die beispielsweise mittels einer Magnetspule eingerichtet werden kann, werden der Zuflussanschluss 52 und der Abflussanschluss 54 gesperrt, derart, dass kein Kühlfluid in den Kühlkanal 72 strömen kann.

In Fig. 9 ist ferner eine Schmierfluidversorgungseinrichtung 126 gezeigt, über die eine Getriebeschmierung 128 und eine Kupplungsschmierung 130 eingerichtet werden können. Die Getriebeschmierung 128 kann eine Einspritzschmierung beinhalten, oder eine Tröpfelschmierung, wie es durch entsprechende Pfeile angedeutet ist. Die Kupplungsschmierung 130 erfolgt in Form einer Einspritzschmierung. Zumindest im Fall der Kupplungsanordnung 100A 1008 hat die Kupplungsschmierung 130 auch den Zweck einer Kühlung bzw. den Zweck der Abfuhr von Wärme aus der Kupplungsanordnung.

Bei 132 ist ein Motortemperatursensor gezeigt. Ein Kupplungstemperatursensor 134 ist im Inneren des Kupplungsgehäuses angeordnet. Ein Getriebetemperatursensor 136 ist im Inneren des Getriebegehäuses 40 angeordnet.

In Abhängigkeit von den Temperaturen bzw. Temperaturdifferenzen wird Kühlfluid in den Kühlkanal 72 geleitet. Hierbei wird von einer Steuereinrichtung, die mit den Temperatursensoren 132 bis 136 verbunden ist, das Absperrventil 124 bedarfsweise geöffnet und geschlossen.

Ferner wird bei einem mittels des Getriebetemperatursensors 136 erfassten Kühlbedarfes in der Getriebeanordnung 18A, 18B ein Verfahren zur bedarfsweisen Kühlung durchgeführt, das die folgenden Schritte aufweist:
Zunächst wird ein Kühlbedarf des Schmierfluides 66 erfasst. Anschließend wird Kühlfluid 27 in den Kühlkanal 72 eingeführt, falls dies nicht bereits erfolgt ist. Anschließend wird zumindest eine der Lastschaltkupplungen 100A, 1008 in Rotation versetzt, falls dies nicht bereits erfolgt ist. Schließlich wird zumindest eine der Lastschaltkupplungen 100A, 1008 mit Schmierfluid 66 versorgt, derart, dass das Schmierfluid 66 durch die Rotation der Lastschaltkupplung radial nach außen gegen eine Innenseite des Kühlkanals 72 gefördert wird.

Dieses Verfahren kann insbesondere auch dann durchgeführt werden, wenn die Lastschaltkupplung 100A, 1008 keinen eigenen Schmierfluidbedarf hat, also nicht geschmiert oder gekühlt werden muss, wie es beispielsweise bei vollständig geöffneter oder vollständig geschlossener Lastschaltkupplung der Fall sein kann. in diesem Fall wird die Schmierfluidversorgungseinrichtung 126 so angesteuert, dass trotz des fehlenden Schmierfluidbedarfs Schmierfluid 66 in wenigstens eine der Lastschaltkupplungen 100A, 1008 eingeführt wird.

Die Zufuhr von Schmierfluid 66 erfolgt dabei insbesondere dann, wenn eine Differenz zwischen einer Temperatur des Schmierfluides 66 und einer Temperatur des Kühlfluides 27 größer ist als ein vorbestimmter Schwellenwert.

Die Kupplungsanordnung mit den Lastschaltkupplungen 100A, 1008 kann so aufgebaut sein, dass die Lastschaltkupplungen 100A, 1008 axial benachbart zueinander angeordnet sind. In diesem Fall erstreckt sich der Kühlkanal 72 vorzugsweise in axialer Richtung über eine benachbarte oder über beide Lastschaltkupplungen 100A, 100B. Alternativ können die Lastschaltkupplungen 100A, 100B auch radial miteinander verschachtelt sein.

Wenn in der Doppelkupplungsgetriebeanordnung beispielsweise Leistung über die erste Lastschaltkupplung 100A übertragen wird (wobei diese geschlossen ist), wozu in dem ersten Teilgetriebe 18A eine Gangstufe eingeschaltet ist, ist die andere Lastschaltkupplung 100B in der Regel geöffnet. Daher besteht in der Kupplungsanordnung generell kein Schmierölbedarf. Falls jedoch der Getriebetemperatursensor 136 anzeigt, dass das Schmierfluid 66 zu kühlen ist, wird von der Schmierfluidversorgungseinrichtung 126 Schmierfluid in die Kupplungsanordnung gefördert, derart, dass das Schmierfluid auf die Innenseite des Kühlkanals 72 geschleudert wird. Hierbei kann es ferner vorteilhaft sein, wenn in dem Teilgetriebe (in dem Beispiel 18B), das der inaktiven Lastschaltkupplung (hier 100B) zugeordnet ist, sämtliche Gangstufen ausgelegt werden, um Schleppverluste zu verringern.

Fig. 10 zeigt eine beispielhafte Darstellung einer Schmierfluidversorgungseinrichtung 126. Diese weist im vorliegenden Fall eine erste Pumpe 138 auf, die mittels eines ersten Motors bedarfsweise angetrieben wird, um aus dem Schmierfluid- sumpf 64 Schmierfluid 66 zur Getriebeschmierung 128 zu fördern. Ferner weist die Schmierfluidversorgungseinrichtung 126 eine zweite Pumpe 140 auf, die mittels eines zweiten Motors bedarfsweise angetrieben wird, um aus dem Schmierfluidsumpf 64 Schmierfluid 66 zur Kupplungskühlung 130 zu fördern.

Die Schmierfluidversorgungseinrichtung 126 kann auch nur eine einzelne bidirektionale Pumpe aufweisen, die in der einen Drehrichtung Schmierfluid 66 zur Kupplungskühlung 130 fördert und in der anderen Drehrichtung Schmierfluid 66 zur Getriebeschmierung 128 fördert.

In Abhängigkeit von den Temperaturen bzw. Temperaturdifferenzen wird Kühlfluid in den Kühlkanal 72 geleitet. Hierbei wird von einer Steuereinrichtung, die mit den Temperatursensoren 132 bis 136 verbunden ist, das Absperrventil 124 bedarfsweise geöffnet und geschlossen.

Ferner wird bei einem mittels des Getriebetemperatursensors 136 erfassten Kühlbedarfes in der Getriebeanordnung 18A, 18B ein Verfahren zur bedarfsweisen Kühlung durchgeführt, das die folgenden Schritte aufweist:

Zunächst wird ein Kühlbedarf des Schmierfluides 66 erfasst. Anschließend wird Kühlfluid 27 in den Kühlkanal 72 eingeführt, falls dies nicht bereits erfolgt ist. Anschließend wird zumindest eine der Lastschaltkupplungen 100A, 100B in Rotation versetzt, falls dies nicht bereits erfolgt ist. Schließlich wird zumindest eine der Lastschaltkupplungen 100A, 100B mit Schmierfluid 66 versorgt, derart, dass das Schmierfluid 66 durch die Rotation der Lastschaltkupplung radial nach außen gegen eine Innenseite des Kühlkanals 72 gefördert wird.

Dieses Verfahren kann insbesondere auch dann durchgeführt werden, wenn die Lastschaltkupplung 100A, 100B keinen eigenen Schmierfluidbedarf hat, also nicht geschmiert oder gekühlt werden muss, wie es beispielsweise bei vollständig geöffneter oder vollständig geschlossener Lastschaltkupplung der Fall sein kann. in diesem Fall wird die Schmierfluidversorgungseinrichtung 126 so angesteuert, dass trotz des fehlenden Schmierfluidbedarfs Schmierfluid 66 in wenigstens eine der Lastschaltkupplungen 100A, 100B eingeführt wird.

Die Zufuhr von Schmierfluid 66 erfolgt dabei insbesondere dann, wenn eine Differenz zwischen einer Temperatur des Schmierfluides 66 und einer Temperatur des Kühlfluides 27 größer ist als ein vorbestimmter Schwellenwert.

Die Kupplungsanordnung mit den Lastschaltkupplungen 100A, 100B kann so aufgebaut sein, dass die Lastschaltkupplungen 100A, 100B axial benachbart zueinander angeordnet sind. In diesem Fall erstreckt sich der Kühlkanal 72 vorzugsweise in axialer Richtung über eine benachbarte oder über beide Lastschaltkupplungen 100A, 100B. Alternativ können die Lastschaltkupplungen 100A, 100B auch radial miteinander verschachtelt sein.

Wenn in der Doppelkupplungsgetriebeanordnung beispielsweise Leistung über die erste Lastschaltkupplung 100A übertragen wird (wobei diese geschlossen ist), wozu in dem ersten Teilgetriebe 18A eine Gangstufe eingeschaltet ist, ist die andere Lastschaltkupplung 100B in der Regel geöffnet. Daher besteht in der Kupplungsanordnung generell kein Schmierölbedarf. Falls jedoch der Getriebetemperatursensor 136 anzeigt, dass das Schmierfluid 66 zu kühlen ist, wird von der Schmierfluidversorgungseinrichtung 126 Schmierfluid in die Kupplungsanordnung gefördert, derart, dass das Schmierfluid auf die Innenseite des Kühlkanals 72 geschleudert wird. Hierbei kann es ferner vorteilhaft sein, wenn in dem Teilgetriebe (in dem Beispiel 18B), das der inaktiven Lastschaltkupplung (hier 100B) zugeordnet ist, sämtliche Gangstufen ausgelegt werden, um Schleppverluste zu verringern.

Fig. 10 zeigt eine beispielhafte Darstellung einer Schmierfluidversorgungseinrichtung 126. Diese weist im vorliegenden Fall eine erste Pumpe 138 auf, die mittels eines ersten Motors bedarfsweise angetrieben wird, um aus dem Schmierfluidsumpf 64 Schmierfluid 66 zur Getriebeschmierung 128 zu fördern. Ferner weist die Schmierfluidversorgungseinrichtung 126 eine zweite Pumpe 140 auf, die mittels eines zweiten Motors bedarfsweise angetrieben wird, um aus dem Schmierfluidsumpf 64 Schmierfluid 66 zur Kupplungskühlung 130 zu fördern.

Die Schmierfluidversorgungseinrichtung 126 kann auch nur eine einzelne bidirektionale Pumpe aufweisen, die in der einen Drehrichtung Schmierfluid 66 zur Kupplungskühlung 130 fördert und in der anderen Drehrichtung Schmierfluid 66 zur Getriebeschmierung 128 fördert.

## Patentansprüche

1. Verfahren zum Temperieren eines Schmierfluides (66) einer Kupplungs-/Getriebeanordnung (16,18) eines Antriebsstranges (12), wobei die Kupplungs-/Getriebeanordnung (16,18) eine Gehäuseanordnung (36) aufweist, in der wenigstens ein Schmierfluid (66) aufgenommen ist, wobei in der Gehäuseanordnung (36) ein in Rotation versetzbares Drehglied (100) angeordnet ist, das von radial innen mit Schmierfluid (66) versorgbar ist, wobei in der Gehäuseanordnung (36) ein Temperierungskanal (72) angeordnet ist, durch den ein Temperierungsfluid (27) strömen kann und der sich um einen Umfangsabschnitt (118) des Drehgliedes (100) herum erstreckt, und mit einer Erfassungseinrichtung (134, 136), die einen Temperierungsbedarf des Schmierfluides (66) erfassen kann, mit den Schritten:
- Erfassen eines Temperierungsbedarfes des Schmierfluides (66);
- Einführen von Temperierungsfluid (27) in den Temperierungskanal (72), falls nicht bereits erfolgt;
- Versetzen des Drehgliedes (100) in Rotation, falls nicht bereits erfolgt, und
- Versorgen des Drehgliedes (100) mit Schmierfluid (66), derart, dass das Schmierfluid (66) durch die Rotation des Drehgliedes (100) radial nach außen gegen eine Innenseite des Temperierungskanals (72) gefördert wird,
wobei die Kupplungs-/Getriebeanordnung (16, 18) ein Doppelkupplungsgetriebe mit einer Doppelkupplungsanordnung (100A, 100B) und wobei das Drehglied (100) eine inaktive Kupplung der Doppelkupplungsanordnung (100A, 100B) ist, **dadurch gekennzeichnet, dass** vor oder bei dem Versorgen wenigstens einer der Kupplungen mit Schmierfluid (66) erfasst wird, ob eine Gangstufe in einem inaktiven Teilgetriebe (18A, 18B) eingelegt ist, und wobei, falls ja, diese Gangstufe ausgelegt wird.

2. Verfahren nach Anspruch 1, wobei das Drehglied (100) bei Temperierungsbedarf des Schmierfluides (66) auch dann mit Schmierfluid (66) versorgt wird, wenn das Drehglied (100) selbst keinen Schmierfluidbedarf hat.

3. Verfahren nach Anspruch 1 oder 2, wobei das Drehglied (100) eine nasslaufende Reibkupplung ist und wobei die Reibkupplung bei Temperierungsbedarf des Schmierfluides (66) in einem geöffneten oder einem geschlossenen Zustand mit Schmierfluid (66) versorgt wird.

4. Verfahren nach einem der Ansprüche 1 bis 3, wobei das Drehglied (100) dann mit Schmierfluid (66) versorgt wird, wenn eine Differenz zwischen einer Temperatur des Schmierfluides (66) und einer Temperatur des Temperierungsfluides (27) größer ist als ein vorbestimmter Schwellenwert.

5. Verfahren nach einem der Ansprüche 1 bis 4, wobei das Drehglied (100) dann mit Schmierfluid (66) versorgt wird, wenn eine Temperatur des Temperierungsfluides (27) kleiner ist als eine Temperatur des Schmierfluides (66).

6. Verfahren nach einem der Ansprüche 1 bis 4, wobei das Drehglied (100) dann mit Schmierfluid (66) versorgt wird, wenn eine Temperatur des Temperierungsfluides (27) größer ist als eine Temperatur des Schmierfluides (66).

7. Verfahren nach einem der Ansprüche 1 bis 6, wobei die Kupplungs-/Getriebeanordnung (16, 18) ein Doppelkupplungsgetriebe mit einer Doppelkupplungsanordnung (100A, 100B) aufweist, und wobei das Drehglied (100) eine inaktive Kupplung der Doppelkupplungsanordnung (100A, 100B) aufweist.

8. Kupplungs-/Getriebeanordnung (16,18) eines Antriebsstranges (12), mit einer Gehäuseanordnung (36), in der wenigstens ein Schmierfluid (66) aufgenommen ist, wobei in der Gehäuseanordnung (36) ein in Rotation versetzbares Drehglied (100) angeordnet ist, das von radial innen mit Schmierfluid (66) versorgbar ist, und mit einer Temperierungsvorrichtung für das Schmierfluid (66), wobei in der Gehäuseanordnung (36) ein Temperierungskanal (72) angeordnet ist, durch den ein Temperierungsfluid (27) strömen kann und der sich um einen Umfangsabschnitt (118) des Drehgliedes (100) herum erstreckt, und mit einer Erfassungseinrichtung (134, 136), die einen Temperierungsbedarf des Schmierfluides (66) erfassen kann,
wobei die Temperierungsvorrichtung dazu ausgebildet ist, das Verfahren nach einem der Ansprüche 1 bis 7 durchzuführen, mit den Schritten:
- Erfassen eines Temperierungsbedarfes des Schmierfluides (66);
- Einführen von Temperierungsfluid (27) in den Temperierungskanal (72), falls nicht bereits erfolgt;
- Versetzen des Drehgliedes (100) in Rotation, falls nicht bereits erfolgt, und
- Versorgen des Drehgliedes (100) mit Schmierfluid (66), derart, dass das Schmierfluid (66) durch die Rotation des Drehgliedes (100) radial nach außen gegen eine Innenseite des Temperierungskanals (72) gefördert wird,
wobei die Kupplungs-/Getriebeanordnung (16, 18) ein Doppelkupplungsgetriebe mit einer Doppelkupplungsanordnung (100A, 100B) aufweist, und wobei das Drehglied (100) eine inaktive Kupplung der Doppelkupplungsanordnung (100A, 100B) ist, **dadurch gekennzeichnet, dass** vor oder bei dem Versorgen wenigstens einer der Kupplungen mit Schmierfluid (66) erfasst wird, ob eine Gangstufe in einem inaktiven Teilgetriebe (18A, 18B) eingelegt ist, und wobei, falls ja, diese Gangstufe ausgelegt wird.

## Claims

1. Method for controlling the temperature of a lubricating fluid (66) of a clutch/transmission arrangement (16, 18) of a drive train (12), wherein the clutch/transmission arrangement (16, 18) has a housing arrangement (36), in which at least one lubricating fluid (66) is held, wherein a rotational element (100) that can be made to rotate and can be supplied with lubricating fluid (66) from radially inside is arranged in the housing arrangement (36), wherein a temperature control channel (72), through which a temperature control fluid (27) can flow and which extends around a circumferential section (118) of the rotational element (100), is arranged in the housing arrangement (36), and with a detector device (134, 136), which can detect a need for temperature control of the lubricating fluid (66), comprising the following steps:
- detecting a need for temperature control of the lubricating fluid (66);
- introducing temperature control fluid (27) into the temperature control channel (72) if not done already;
- making the rotational element (100) rotate if not done already, and
- supplying the rotational element (100) with lubricating fluid (66), such that the lubricating fluid (66) is conveyed radially outward against an inner side of the temperature control channel (72) by the rotation of the rotational element (100),
wherein the clutch/transmission arrangement (16, 18) a dual clutch transmission with a dual clutch arrangement (100A, 100B), and wherein the rotational element (100) is an inactive clutch of the dual clutch arrangement (100A, 100B), **characterized in that**, before or during the supply of lubricating fluid (66) to at least one of the clutches, the system detects whether a gear stage in an inactive component transmission (18A, 18B) is engaged, and wherein, if yes, this gear stage is disengaged.

2. Method according to Claim 1, wherein, if there is a need for temperature control of the lubricating fluid (66), the rotational element (100) is supplied with lubricating fluid (66), even if the rotational element (100) itself has no need for lubricating fluid.

3. Method according to Claim 1 or 2, wherein the rotational element (100) is a wet friction clutch and wherein the friction clutch is supplied with lubricating fluid (66) in an open or a closed state if there is a need for temperature control of the lubricating fluid (66).

4. Method according to one of Claims 1 to 3, wherein the rotational element (100) is supplied with lubricating fluid (66) if a difference between a temperature of the lubricating fluid (66) and a temperature of the temperature control fluid (27) is greater than a predetermined threshold value.

5. Method according to one of Claims 1 to 4, wherein the rotational element (100) is supplied with lubricating fluid (66) if a temperature of the temperature control fluid (27) is lower than a temperature of the lubricating fluid (66).

6. Method according to one of Claims 1 to 4, wherein the rotational element (100) is supplied with lubricating fluid (66) if a temperature of the temperature control fluid (27) is higher than a temperature of the lubricating fluid (66).

7. Method according to one of Claims 1 to 6, wherein the clutch/transmission arrangement (16, 18) has a dual clutch transmission with a dual clutch arrangement (100A, 100B), and wherein the rotational element (100) has an inactive clutch of the dual clutch arrangement (100A, 100B).

8. Clutch/transmission arrangement (16, 18) of a drive train (12), having a housing arrangement (36), in which at least one lubricating fluid (66) is held, wherein a rotational element (100) that can be made to rotate can be supplied with lubricating fluid (66) from radially inside is arranged in the housing arrangement (36), and having a temperature control device for the lubricating fluid (66), wherein a temperature control channel (72), through which a temperature control fluid (27) can flow and which extends around a circumferential section (118) of the rotational element (100), is arranged in the housing arrangement (36) and having a detector device (134, 136), which can detect a need for temperature control of the lubricating fluid (66), wherein the temperature control device is designed to carry out the method according to one of Claims 1 to 7, comprising the following steps:
- detecting a need for temperature control of the lubricating fluid (66);
- introducing temperature control fluid (27) into the temperature control channel (72) if not done already;
- making the rotational element (100) rotate if not done already, and
- supplying the rotational element (100) with lubricating fluid (66), such that the lubricating fluid (66) is conveyed radially outward against an inner side of the temperature control channel (72) by the rotation of the rotational element (100),
wherein the clutch/transmission arrangement (16, 18) has a dual clutch transmission with a dual clutch arrangement (100A, 100B), and wherein the rotational element (100) is an inactive clutch of the dual clutch arrangement (100A, 100B), **characterized in that**, before or during the supply of lubricating fluid (66) to at least one of the clutches, the system detects whether a gear stage in an inactive component transmission (18A, 18B) is engaged, and wherein, if yes, this gear stage is disengaged.

## Revendications

1. Procédé de thermorégulation d'un fluide de lubrification (66) d'un ensemble d'embrayage/de transmission (16, 18) d'une chaîne cinématique (12), l'ensemble d'embrayage/de transmission (16, 18) comprenant un ensemble de boîtier (36) dans lequel au moins un fluide de lubrification (66) est reçu, un organe rotatif (100) pouvant être mis en rotation étant disposé dans l'ensemble de boîtier (36), lequel organe rotatif peut être alimenté en fluide de lubrification (66) radialement depuis l'intérieur, un canal de thermorégulation (72) étant disposé dans l'ensemble de boîtier (36), canal à travers lequel un fluide de thermorégulation (27) peut s'écouler et lequel s'étend autour d'une partie périphérique (118) de l'organe rotatif (100), et comprenant un dispositif de détection (134, 136) qui peut détecter une exigence de thermorégulation du fluide de lubrification (66), comprenant les étapes de :
- détection d'une exigence de thermorégulation du fluide de lubrification (66) ;
- introduction du fluide de thermorégulation (27) dans le canal de thermorégulation (72) si cela n'a pas déjà été fait ;
- mise en rotation de l'organe rotatif (100) si cela n'a pas déjà été fait et
- alimentation de l'organe rotatif (100) en fluide de lubrification (66), de telle sorte que le fluide de lubrification (66) soit refoulé, par la rotation de l'organe rotatif (100), radialement vers l'extérieur contre un côté intérieur du canal de thermorégulation (72),
l'ensemble d'embrayage/de transmission (16, 18) une transmission à embrayage double comprenant un ensemble d'embrayage double (100A, 100B) et l'organe rotatif (100) étant un embrayage inactif de l'ensemble d'embrayage double (100A, 100B), **caractérisé en ce qu'**avant ou lors de l'alimentation d'au moins l'un des embrayages en fluide de lubrification (66), on détecte si un rapport de vitesse est enclenché dans une transmission partielle inactive (18A, 18B), et ce rapport de vitesse étant désenclenché si tel est le cas.

2. Procédé selon la revendication 1, dans lequel l'organe rotatif (100) est, en cas d'exigence de thermorégulation du fluide de lubrification (66), également alimenté alors en fluide de lubrification (66) si l'organe rotatif (100) lui-même ne nécessite pas de fluide de lubrification.

3. Procédé selon la revendication 1 ou 2, dans lequel l'organe rotatif (100) est un embrayage à friction humide, et dans lequel l'embrayage à friction est, en cas d'exigence de thermorégulation du fluide de lubrification (66), alimenté en fluide de lubrification (66) dans un état ouvert ou dans un état fermé.

4. Procédé selon l'une des revendications 1 à 3, dans lequel l'organe rotatif (100) est alors alimenté en fluide de lubrification (66) lorsqu'une différence entre une température du fluide de lubrification (66) et une température du fluide de thermorégulation (27) est supérieure à une valeur seuil prédéfinie.

5. Procédé selon l'une des revendications 1 à 4, dans lequel l'organe rotatif (100) est alors alimenté en fluide de lubrification (66) lorsqu'une température du fluide de thermorégulation (27) est inférieure à une température du fluide de lubrification (66).

6. Procédé selon l'une des revendications 1 à 4, dans lequel l'organe rotatif (100) est alors alimenté en fluide de lubrification (66) lorsqu'une température du fluide de thermorégulation (27) est supérieure à une température du fluide de lubrification (66).

7. Procédé selon l'une des revendications 1 à 6, dans lequel l'ensemble d'embrayage/de transmission (16, 18) comprend une transmission à embrayage double dotée d'un ensemble d'embrayage double (100A, 100B), et dans lequel l'organe rotatif (100) comprend un embrayage inactif de l'ensemble d'embrayage double (100A, 100B).

8. Ensemble d'embrayage/de transmission (16, 18) d'une chaîne cinématique (12), comprenant un ensemble de boîtier (36) dans lequel est reçu au moins un fluide de lubrification (66), un organe rotatif (100) pouvant être mis en rotation étant disposé dans l'ensemble de boîtier (36), lequel organe rotatif peut être alimenté en fluide de lubrification (66) radialement depuis l'intérieur, et comprenant un dispositif de thermorégulation pour le fluide de lubrification (66), un canal de thermorégulation (72) étant disposé dans l'ensemble de boîtier (36), canal à travers lequel un fluide de thermorégulation (27) peut s'écouler et lequel s'étend autour d'une partie périphérique (118) de l'organe rotatif (100), et comprenant un dispositif de détection (134, 136) qui peut détecter une exigence de thermorégulation du fluide de lubrification (66),
le dispositif de thermorégulation étant conçu pour mettre en œuvre le procédé selon l'une des revendications 1 à 7, comprenant les étapes de :
- détection d'une exigence de thermorégulation du fluide de lubrification (66) ;
- introduction du fluide de thermorégulation (27) dans le canal de thermorégulation (72) si cela n'a pas déjà été fait ;
- mise en rotation de l'organe rotatif (100) si cela n'a pas déjà été fait et
- alimentation de l'organe rotatif (100) en fluide de lubrification (66), de telle sorte que le fluide de lubrification (66) soit refoulé, par la rotation de l'organe rotatif (100), radialement vers l'extérieur contre un côté intérieur du canal de thermorégulation (72),
l'ensemble d'embrayage/de transmission (16, 18) ayant une transmission à embrayage double comprenant un ensemble d'embrayage double (100A, 100B) et l'organe rotatif (100) étant un embrayage inactif de l'ensemble d'embrayage double (100A, 100B), **caractérisé en ce qu'**avant ou lors de l'alimentation d'au moins l'un des embrayages en fluide de lubrification (66), on détecte si un rapport de vitesse est enclenché dans une transmission partielle inactive (18A, 18B), et ce rapport de vitesse étant désenclenché si tel est le cas.
